# EUROPEAN PATENT SPECIFICATION

(11) **EP 2 818 051 B1**
(45) Date of publication and mention of the grant of the patent: **28.06.2017**
(21) Application number: 13003270.9
(22) Date of filing: 27.06.2013
(51) Int. Cl.: A23G 1/00, A23G 1/18

(54) **PROCESS FOR CONTROLLING CHOCOLATE DURING NON-PRODUCTION**
VERFAHREN ZUR STEUERUNG VON SCHOKOLADE WÄHREND NICHT-PRODUKTION
PROCÉDÉ POUR COMMANDER LE CHOCOLAT PENDANT UNE NON PRODUCTION

(43) Date of publication of application: 31.12.2014
(73) Proprietor: Aasted ApS, 3520 Farum (DK)
(72) Inventor: Holmud, Dennis, 2860 Søborg (DK)
(74) Representative: Heiden, Finn

(56) References cited:
- EP-A2- 2 210 499
- EP-A2- 2 210 500
- EP-A2- 2 210 501
- GB-A- 1 122 461
- US-A1- 2005 087 078

## Description

The present invention concerns a process for controlling chocolate mass in production equipment during periods of non-production.

During periods of production chocolate mass must be pumpable to such an extent that it is capable of flowing in the equipment of a production system such as a chocolate moulding line, a chocolate enrobing line or the like. The equipment comprise pipes connecting tanks and all kinds of pumps and machinery for the particular chocolate mass production purpose. The chocolate mass must also be tempered and crystallised when pumped through a tempering machine or device in the production system. Then, the mass has a certain and controlled content of crystals when leaving the tempering machine ready for being deposited into moulds, being enrobed onto centres on a belt by an enrober or whatever the final process may be. Before the chocolate mass is supplied to perform the actual tempering process by running continuously through the tempering apparatus, the mass is heated to around 40-50°C in a premature step. Then, all the crystals in the chocolate mass are melted. The premature step is typically arranged distant to the tempering apparatus as the mass is heated in a storage tank. However, a heating step could also be arranged in the tempering apparatus in front of the cooling stage. This is required when the chocolate mass delivered to the tempering machine has a temperature lower than 40°C, for example when it is being re-circulated from the enrober or depositor directly to the tempering machine.

Generally, the chocolate mass encompass all types of suspensions of non-fat particles such as sugar, milk powders and cocoa solids mixed up with a liquid fat constituent, so that the suspensions are capable of crystallizing. When it comes to the most widely used chocolate mass types, the fat constituent comprises genuine cocoa butter typically in a content of up to approximately 35% for dark chocolate recipes being the most "richest" in cocoa content. However, the fat phase may also comprise substitutes as well, such as milk chocolate recipes comprising milk, etc. A small content of up to 2-3 % of genuine cocoa butter may still be left in the recipes. Substitutes may be in the form of other types of fat-containing oils such as palm-kernel oil. Chocolate types having the cocoa butter been replaced by other fats are often named commercially as compound chocolate, especially when the cocoa butter has been replaced nearly completely by palm-kernel oil. Mass made of up to 100% cocoa butter may however also be continuously tempered. It is used later on as constituent in the production of different chocolate mass recipes.

The periods of production, the so-called "production mode" of the equipment are off course variable depending on the particular facilities, requirements for delivery, personal capacity etc. They may extend from a few hours a day up to for example 13-14 hours a day or more. However, a typical pattern of production is 7-12 hours a day and the rest of the 24 hours are periods of non-production. From Friday afternoon and until Monday morning the production is typically shut down.
For each week, periods of non-production typically extend to four times 12 hours plus 60 hours during the weekend. In total more than 100 hours per week.

During periods of non-production, the chocolate mass is controlled so it doesn't crystallise and solidify in the production equipment. This is traditionally done by heating up the chocolate mass in the equipment, tanks and machinery such as the tempering machines. The prior art teaches only one direction, that the mass is heated so high in temperature, that the particular mass is for sure free from any crystals, i.e up to temperatures between 40°C and 50°C. According to the prior art any chocolate mass recipe must remain at this temperature level not to have any crystal creation in it and to remain free from crystals during any time period. This condition is called the "night mode". The rest of the periods of non-production the chocolate temperatures are kept in that high temperature level until preparations for a new production is started up in the morning when personnel again meet at work. Then, the tempering machines are again set into "tempering" mode and the chocolate mass temperature in the production equipment is slowly lowered from 40-50°C and towards the temperature for delivering ready tempered chocolate mass of the particular chocolate recipe to the production of chocolate items. For milk chocolate it could for example be 29°C. The prior art gives no indication of that chocolate mass could be maintained at temperature levels lower than 40°C to 50°C and remain crystal-free during neither production nor non-production periods. On the contrary, it is taught by experts in the field, that any chocolate mass recipe must always remain in that temperature interval during non-production for being free from crystals during that period.

The energy consumption is high for maintaining the chocolate mass with a temperature of 40-50°C in the production equipment, i.e.in the "night" condition. Typically electric power is used for heating up the water, which is circulating in hollow spaces behind jackets extending around the pipes and machinery.
For a smaller chocolate moulding line with a maximum capacity of moulding 500 kg of chocolate items per hour, the tempering process typically consumes 4-5 Kw/hour in the "Night" mode with a chocolate temperature of 45°C.
At the end of the "Night" mode the personnel initiates the "start-up" of the "production" mode, which takes down the temperature of the chocolate mass in the production equipment to the desired production level. This is typically done when the chocolate passes through the tempering machine bringing down the chocolate temperature to the crystal-creation temperature for the particular recipe and simultaneously working the mass with stirring tools so it is given some shear force. Typically, it takes around 30-45 minutes before the temperature is brought down sufficiently and the chocolate delivered from the tempering machine is tempered as desired in a continuous flow. Then, the production may begin.
For the personnel it is cumbersome to wait the long period of 30-45 minutes before the production can begin. The energy consumption is also very high during that period, especially when the temperature drop must be forced not to take more than 45 minutes. US 2005/087078 A1 discloses a small chocolate tempering apparatus designed to be placed on a table. The apparatus has an open bowl into which a block of chocolate having a maximum weight of 5 kilograms is allowed to drip when being melted in an upper holder. Such a tempering apparatus is used by confiseurs, in small shops, bakeries and generally where only a small number of spezialized and delicate food articles are made. The chocolate may be kept in the bowl over-night at a temperature of 35°C in a decrystallised state for saving additional melting and clean-up time. With the solution of the present invention the chocolate mass is heated to 40-50 °C, whereafter the chocolate mass is cooled to a "rest" temperature, which is above the crystal-creation temperature for the particular chocolate mass and that the mass is kept at that temperature until next production start-up.
The "rest" temperature is a constant temperature at which the chocolate mass is maintained for the longest possible time period during non-production of chocolate articles. The level of the "rest" temperature is much lower than 40-50°C as taught by the prior art. However, with the inventive process it was surprisingly found, that the chocolate mass is still in a condition free from crystals, so that it can be maintained at the "rest" temperature for as long time as desired without solidification, for a week, a month or longer if required. The necessary energy input to the production equipment is then much lower than by the prior art, i.e. typically lesser than 50% thereof.

When the production is to be started up again pumps and stirring tools are activated and the temperature of chocolate mass of the inventive solution is low and much closer to the crystal-creation temperature of the mass than by the prior art. Both the necessary energy input as well as the time for achieving a tempered mass ready for production is reduced severely in comparison with the prior art. The time needed for transferring the mass from the "rest" temperature and to the temperature of the ready tempered mass is typically lesser than % of the time needed by the prior art. It means further reduction in expenses for personnel as well as greater flexibility and faster production changes.

When the chocolate mass is cooled to a "rest" temperature of 36°C or lower and that the mass is kept at that temperature without being subjected to pumping, stirring or mixing, the savings in energy are huge. The crystal-creation temperature for dark chocolate mass with a high content of cocoa, such as above 65%, is below 36°C, and is typically 32-34°C. For all other types of chocolate mass recipes having lesser content of cocoa butter the crystal-creation temperature is even further below. For all contents of cocoa butter one is then sure not to create crystals in the mass, that could start up solidification and consequently shorten the time at "rest" before new heating must be applied.
Then, it is advantageously ensured, that a very high temperature drop is performed for all chocolate mass recipes and that they may be maintained at that "rest" temperature at a limitless long time period. They may be maintained for weeks or months at the "rest" temperature. Consequently high and reliable savings in energy input is achieved for any chocolate mass recipe for maintaining the "rest" temperature in comparison with the prior art.
When start-up of a new production procedure is initiated the temperature of the mass quickly drops towards the crystal-creation temperature of the particular chocolate mass recipe. The start-up procedure then takes up to 10 minutes only, typically 5-8 minutes, and the energy requirement for dropping the mass temperature a few degrees is small. With the prior art the start-up takes typically at least 40 minutes as the chocolate temperature is lowered from 45-50 degrees and to the temperature of the crystallised mass.
By the tempering process at production the chocolate mass is cooled to the crystal-creating temperature for the particular recipe, stirred and mixed and typically further reheated 0,5-1,0°C before leaving the tempering machine with a temperature of 25-32 °C for the further supply to the production. The actual temperature of the mass is then depending on the chocolate mass constitution, i.e. the recipe thereof. The lower the content of cocoa butter is, then the lower the temperature of the tempered chocolate mass is when supplied to the production apparatus such as a depositor in a moulding line or to an enrober in an enrobing line.
However, for the continuous tempering to be performed during production, it is decisive, that whether the fat phase constitutes of genuine cocoa butter or substitutes, the fat phase must be capable of crystallizing into stable crystal types when the mass solidifies, such as the βV-crystals developing in genuine cocoa butter. The crystal-creation temperature thereof is 32-34 °C in a dark chocolate mass recipe having high content of cocoa butter. Only then, chocolate articles with good taste, crisp break and shiny appearance are created. When we are talking about mass recipes where more and more of the cocoa butter is replaced by other types of fat, such as milk fat, then, the crystal-creating temperature of the mass recipe gets lower and lower. It should also be mentioned, that it was discovered, that at temperatures above 34 °C the βV-crystals are melting again. The solidified chocolate articles will also achieve the longest possible shelf life and the best resistance against bloom, when instable crystals are diminished. If there is a content of in-stable crystals left in the tempered mass, they will give rise to shorter shelf-life as the articles will bloom more quickly as when in-stable crystals are not present.

Optimal is then, when the type of crystals are stable βV-crystals. The content thereof in the ready tempered chocolate mass shall be at a desired content- for example of 1,0 % for a specific production. Only then, the manufacturer can rely on that the quality of his chocolate products are always the same.

According to another embodiment of the inventive process, the chocolate mass is cooled to a "rest" temperature that is 1°C above the crystal-creation temperature for the particular mass recipe. The highest possible savings in energy input is then achieved. Then, one is sure that crystallisation is not initiated, however, in spite of that, the lowest possible "rest" temperature is achieved for the particular chocolate mass and recipe. Then the energy consumption to maintain that temperature is also the lowest possible.

It is especially advantageous when the chocolate mass is cooled to a "rest" temperature of 32-35 °C when the mass is dark chocolate mass, that the chocolate mass is cooled to a "rest" temperature of 29-32 °C when the mass is milk chocolate mass, and that the mass is cooled to a "rest" temperature of 26-29 °C, when the mass is nougat or creme mass.

It is further advantageous when any energy input to the production line is halted, so that the chocolate mass is allowed to cool under the influence of the temperatures of the surroundings of the production equipment only.

When the chocolate mass is cooled to a "rest" temperature, which is above the crystal-creation temperature for the particular chocolate mass, and the mass is kept at that temperature until next production start-up without being heated to 40-50 °C in a premature step, the energy requirement is the smallest possible. Also the time needed for achieving the "rest" condition is the shortest possible. The "rest" temperature is advantageously 1 °C above the "crystal-creation" temperature for the particular recipe.

Advantageously, the pumps of the production equipment is not being activated as the time period for keeping the mass in the "rest" condition is then the largest possible without crystallization leading to solidification. The temperature of the mass is lowered and the mass becomes thicker and thicker. The mass is not flowing in the production equipment as during production procedures. It may be still and only pumped when the pressure build-up of the mass is measured during appliance of pump pressure from time to time. The energy consumption in the production equipment is then diminishing during lowering of the temperature in comparison with the prior art where the temperature is raised to 45-50 degrees.

The temperature of the mass is kept constant when the pressure build-up in the mass reaches a predefined maximum. Then, the temperature of the chocolate mass is so low that it is still being pumpable in the production equipment, however not yet being solid. This condition of the mass is controlled with the usual tempering system in the production equipment until production start-up. The result is a condition with a minimum of energy requirement for keeping that low temperature in comparison with the prior art.

When start-up of a new production procedure is initiated the temperature of the mass is a few degrees lower only, than the temperature of the mass having run through the tempering machine and being ready for production. The start-up procedure then takes 3-4 minutes only, and the energy requirement for raising the mass temperature a few degrees is small. With the prior art the start-up takes typically at least 30 minutes as the chocolate temperature is lowered from 45-50 degrees and to the temperature of the crystallised mass.

The invention is explained further in view of the drawings, at which
Fig. 1 discloses part of a chocolate mass production system, comprising storage tank, pump and chocolate tempering machine,
Fig. 2 a chocolate temperature graph over 24 hours, disclosing a first embodiment of the process according to the invention,
Fig. 3 same as in figure 2 of a second embodiment with dark chocolate mass,
Fig. 4 same as in figure 2 of a third embodiment with milk chocolate mass, and
Fig. 5 same as in figure 2 of a fourth embodiment with nougat chocolate mass.

The chocolate mass storage tank 1, the pump 2 and the chocolate tempering machine 3 are part of a greater system or line for production of chocolate articles. It could be a chocolate moulding line, an enrobing line, a bar line or any other production system with tempered chocolate mass.

A pipe 4 connects the storage tank 1 with the pump 2, and a pipe 5 connects the pump 2 with the tempering machine 3. Chocolate mass is stored at 40-50°C in the tank 1 and by the action of the pump 2 the mass is flowing from the tank 1, through the pipe 4, the pump 2, the pipe 5 and into the tempering machine 3. The pump could also be arranged at the bottom of the tempering machine.

Through a pipe 6 the chocolate mass leaves the tempering machine 3. At the top of the pipe 6 is arranged a two-way valve 7 from which the pipe branches into a pipe 8 and a pipe 9. The pipe 8 leads to chocolate mass consuming equipment such as a depositor, an enrober or other production equipment. The pipe 9 is connected to the top of the tank 1 and returns chocolate mass from the tempering machine and to the tank 1 when required. Another pipe 10 may return chocolate mass from the production consuming equipment and to the tank 1. A control panel 11, typically a "touch" screen, is arranged at the front of the tempering machine 3 for operating the tempering machine. The screen performs "read-out" of chocolate temperatures and operating mode. The chocolate temperatures are typically measured via sensors at the inlet and the outlet of the machine as well as places in between. Via the screen the tempering machine and the whole line can be set to "operating" mode, or to "Rest" mode as with the inventive process.
The tempering machine could have any capacity in tempered chocolate per hour, for example 500 kg/hour, 1000 kg/hour or 2000 kg/hour. Widely used tempering machines are available with maximum capacities up to 12000 kg/hour.

The tempering machine has a column inside with different stages for providing the proper and desirable tempering process for the particular chocolate mass recipe. The first in the column in front of the actual tempering stages may be a heating stage for heating the chocolate up to 40-50°C before it is tempered in the following stages. Chocolate mass with content of crystals or lower temperatures than 40-50°C can then be supplied to the tempering machine without affecting the quality of the tempered chocolate mass. The temperature of the chocolate mass in the storage tank feeding chocolate to the tempering machine may then be lower than 40°C and have a random content of crystals.

In the "production" mode the temperature settings of the tempering machine is for example adjusted to deliver tempered dark chocolate with a temperature of 32°C through the pipe 6. This applies for a specific chocolate mass recipe which has been tested to achieve the most perfect tempered chocolate mass before the actual production begins. The most optimal settings of temperatures are saved in the screen and computer. The dark chocolate has a cocoa butter content of 31 %.
A milk chocolate mass recipe can for example be supplied from the tempering machine with a temperature of 30°C and a nougat mass can be supplied with a temperature of 26°C.

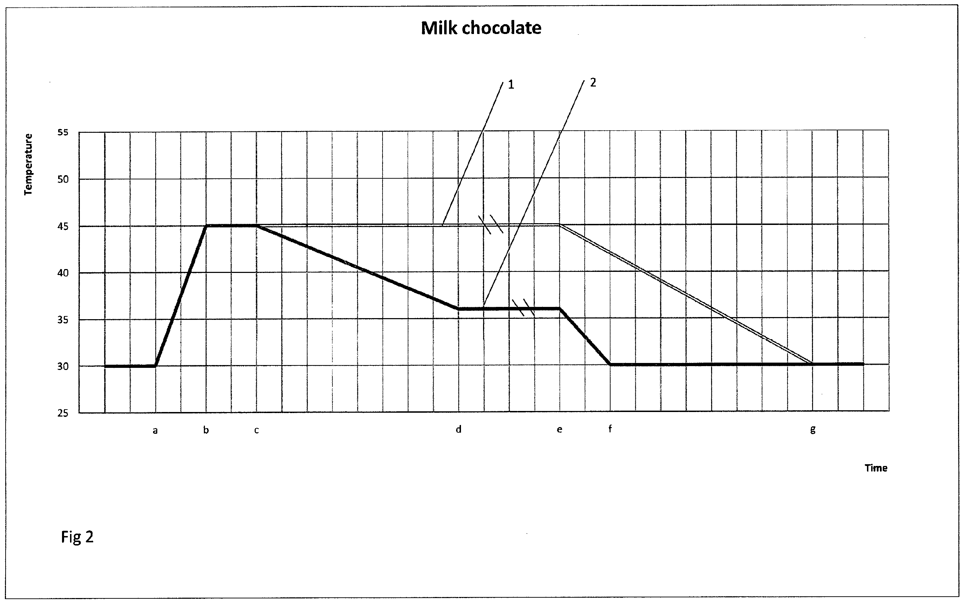

In figures 2-5 the graphs 1, 3, 5 and 7 disclose temperatures of the particular prior art. The graphs 2, 4, 6 and 8 disclose the temperatures of the inventive process. The figures 2-5 provides a schematic view, so that ,at any time moment the temperature of the inventive process can be compared with the temperature of the prior art. At the moment d for example, the temperature of the inventive process 2 is 36 °C and the temperature of the prior art is 45°C in figure 2. Apart from that, the time axis of figures 2-5 is compressed, especially from moment a to moment e in view of the units of the time axis from moment e to g. Only then, it was possible to compare the inventive process with the prior art graphically as temperature versus time graphs.

The temperature graphs 1 and 2 of figure 2 disclose the temperatures of the chocolate mass in the tempering machine 3 during at least 24 hours. The graph 1 is for the traditional prior art process and the graph 2 is for the inventive process during non-production.

The chocolate mass is a recipe with 15% cocoa butter such as a "rich" milk chocolate.

During the production period the tempered chocolate mass is delivered with a temperature of 30°C from the tempering machine to the consuming equipment. At the end of the production period, for example at the end of the working day at the moment a, the tempering machine is changed from "production" mode to "rest" mode. The temperature of the chocolate mass in the tempering machine rises to 45°C at the moment b. The temperature is then kept constant for 20 minutes until moment c. All crystals in the mass are then melted so that no crystals are left. The progress until c also applies for the prior art process. At c the invention departure from the prior art. The temperature of the chocolate mass is lowered until above the crystal-creation temperature for the particular milk chocolate mass, i.e. until 36°C at moment d. The temperature of 36°C is then kept constant for as long period as desired until moment e, at which the personnel has met at work again. The length of the period d-e can be as long as it is required, which is depicted by two vertical "cutting" lines. So the extension of d-e could for example be overnight until next morning being a working day, or it could extend over a weekend until Monday morning. The period d-e could also extend over many days such as a week, or even several weeks until it is decided to start up the production again.
In all the period d-e the chocolate mass of the prior art method is 9°C warmer.

A tempering machine having a maximum capacity of 500 kg/hour consumes 4kw/hour of total electric power in the prior art "Night" mode during the period d-e. The same tempering machine consumes 1,9kw/hour of electric power in the inventive "rest" mode during the same period.

At the moment e the setting is altered to the "production" mode for both processes when the personnel has met at work. The temperature of the chocolate mass quickly drops to the desired production temperature of 30°C with the inventive process. It takes 6 minutes, only. However, with the prior art process it takes 32 minutes. With the novel process the personnel wins 26 minutes more production or they can finish their work earlier than with the prior art process.

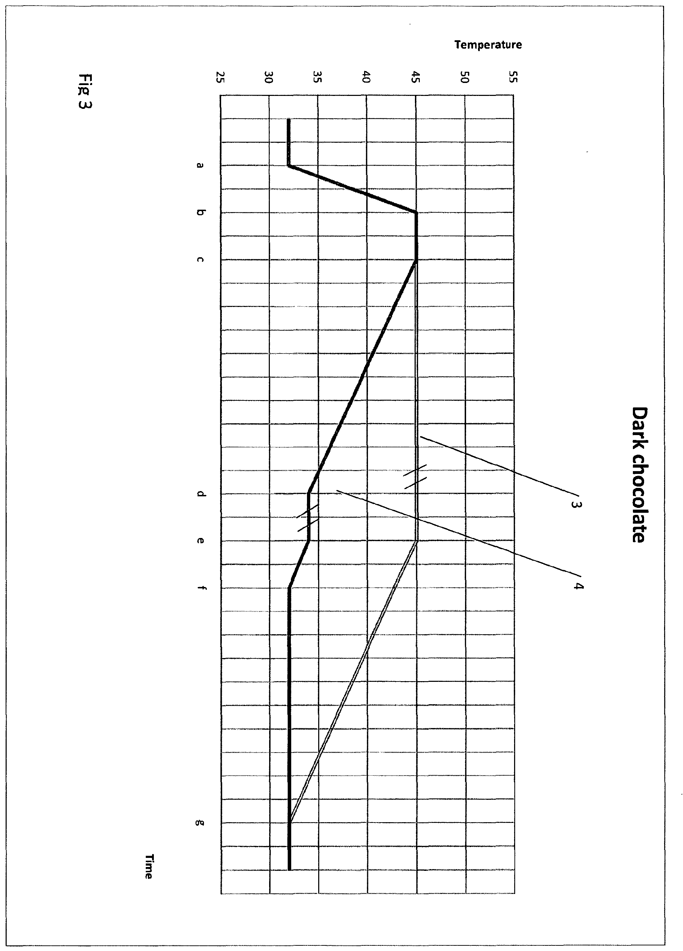

At figure 3 is disclosed an example with dark chocolate mass having a cocoa butter content of 31%. The temperature of the tempered chocolate mass delivered in the "production" mode is 32°C. At moment c the graph 4 disclosing the inventive process departures from the graph 3 disclosing the prior art process where the chocolate temperature is kept at 45°C all the time during the "night" mode. In the "rest" mode setting of the inventive process the temperature is kept at 45°C in 20 minutes from b to c so it is free from crystals. Between moment c and d the temperature is allowed to drop under influence of the surrounding temperature of 25°C in the factory. All heat transfer to the tempering machine is shut out. The temperature of the chocolate mass in the tempering machine then drops to a setting of 34°C, which is then kept permanent during the remaining part of the "rest" mode period, d-e. The crystal-creation temperature of the particular dark chocolate recipe is 33°C. The permanent heating of the chocolate in the storage tank 1 is typically maintained when the period c-e is "over-night" only. However, if this period is longer, such as extending over a weekend, great savings in energy consumption for heating the tank is achieved when lowering the temperature of the mass in the tank 1 to the same level as the "rest"mode temperature of the chocolate mass in the tempering machine, i.e. in figure 3 of 34°C. The length of the period d-e can be as long as it is required, which is depicted by two vertical "cutting" lines. The extension of d-e could for example be overnight until next morning being a working day, or it could extend over a weekend until Monday morning. The period d-e could also extend over many days such as a week, or even several weeks until it is decided to start up the production again.

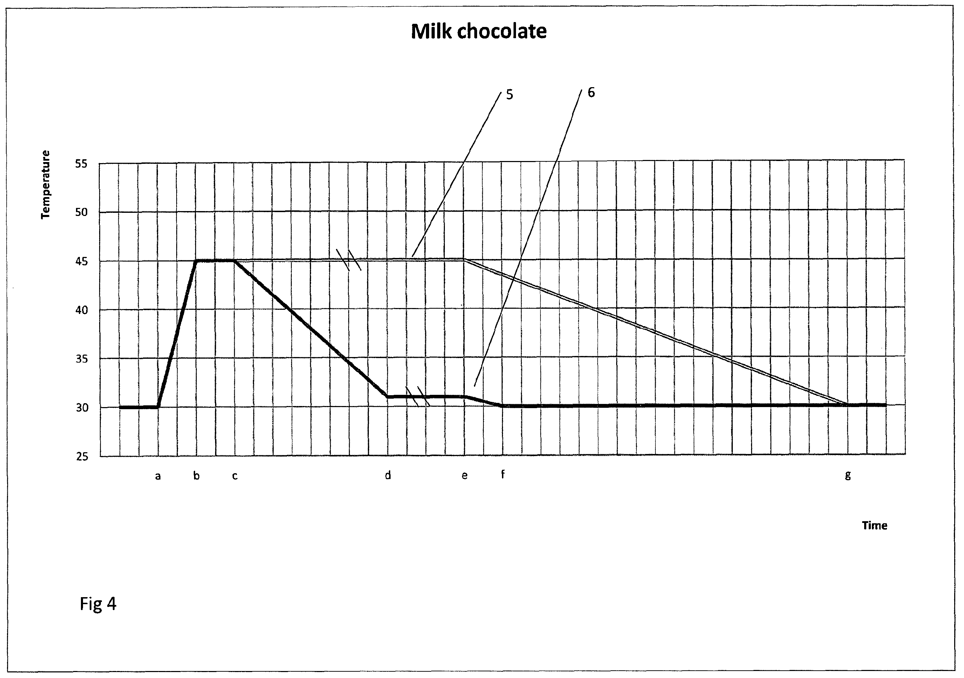

At figure 4 is disclosed a process with milk chocolate. The temperature of the tempered chocolate mass delivered in the "production" mode is 30°C. At moment c the graph 6 disclosing the inventive process departures from the graph 5, which discloses the prior art process. The chocolate temperature is kept permanently at 45°C during the "night" mode with the prior art process 5. In the "rest" mode setting of the inventive process the temperature is kept at 45°C in 20 minutes from b to c so it is free from crystals. Between moment c and d the temperature of the mass is allowed to drop under influence of the surrounding temperature of 25°C in the factory until it maintains the "rest"-mode temperature of 31 °C. All heat transfer to the tempering machine and tank is shut out. No pumps are running and the chocolate in the tank is allowed to cool down to the same temperature during the beginning of the weekend. Then, no energy at all is consumed by the production equipment. The temperature of the chocolate mass in the tempering machine then drops to a setting of 31 °C at the moment d, which is then kept permanent during the remaining "rest" mode period. The crystal-creation temperature of the particular milk chocolate recipe is 29,5°C.

The energy savings are reflected by the temperature difference of 15°C between the prior art process and the inventive process. In this example they are as great as 64%. At the moment e the tempering machine is set to "production" mode. The machine can within a few minutes deliver ready tempered chocolate. With the prior art it takes 45 minutes before it is ready. The length of the period d-e can be as long as it is required, which is depicted by two vertical "cutting" lines. The extension of d-e could for example be overnight until next morning being a working day, or it could extend over a weekend until Monday morning. The period d-e could also extend over many days such as a week, or even several weeks until it is decided to start up the production again.

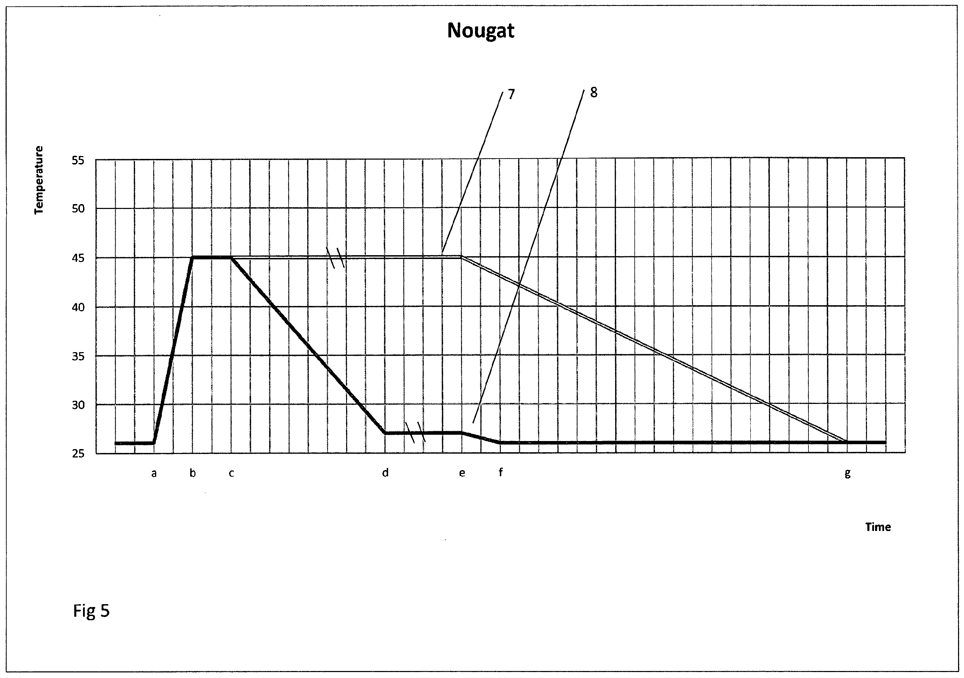

At figure 5 is disclosed an example with nougat mass. The temperature of the tempered chocolate nougat mass delivered in the "production" mode is 26°C. At moment c the graph 8 disclosing the inventive process departures from the graph 7 disclosing the prior art process where the mass temperature is kept at 45°C all the time during the "night" mode. In the "rest" mode setting of the inventive process the temperature is kept at 45°C in 30 minutes from b to c so it is free from crystals.. Between moment c and d the temperature is allowed to drop under influence of the surrounding temperature of 25°C in the factory. All heat transfer to the tempering machine is shut out. The temperature of the nougat mass in the tempering machine then drops to a setting of 27°C, which is then kept permanent during the remaining part of the "rest" mode period, d-e. The crystal-creation temperature of the nougat mass recipe is 26°C.
The energy savings are reflected by the temperature difference of 18°C between the prior art process and the inventive process. In this example they are as great as 67%.
At the moment e the tempering machine is set to "production" mode. The machine can within a few minutes deliver ready tempered nougat mass. With the prior art it takes at least 40 minutes before it is ready. As also depicted in the figures 2-4 the length of the period d-e can be as long as it is required, which is depicted by two vertical "cutting" lines. The extension of d-e could for example be overnight until next morning being a working day, or it could extend over a weekend until Monday morning. The period d-e could also extend over many days such as a week, or even several weeks until it is decided to start up the production again.

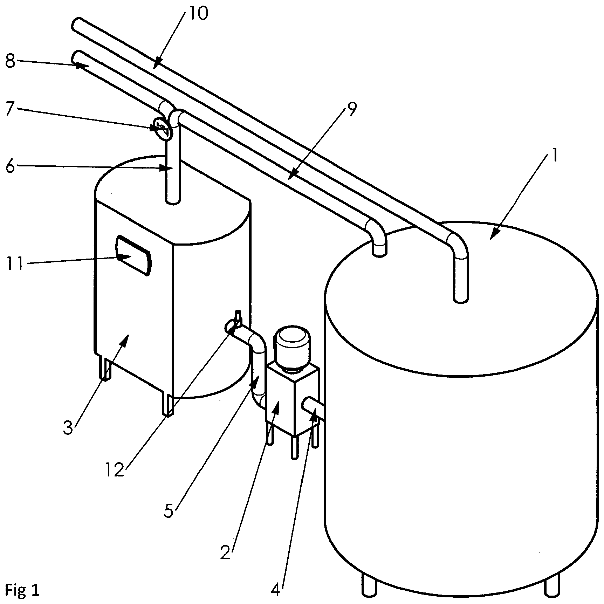

A pressure sensor may be arranged inside the tempering machine, especially in a conduit close to the pump such as the disclosed pressure sensor 12 at figure 1. The sensor 12 is typically connected to the control panel 11 by non-disclosed wire. The pressure may be logged periodically and stored in the computer of the operating screen. If the pressure exceeds a threshold value of 6 bar or 10 bar the heating may be activated so that the chocolate temperature is raised slightly until the mass again are thinner and more "liquid". This is especially an advantage when the chocolate mass constitutes crystals when entering the "rest" mode, for example if it enters this mode directly from production mode without having been heated to over 40°C for a while making it crystal-free.

## Claims

1. Process for controlling chocolate mass in production equipment during periods of non-production,
which chocolate mass during periods of production is pumpable to such an extent
that it is capable of flowing in the equipment of a production system such as a chocolate moulding line, a chocolate enrobing line or the like,
and which chocolate mass is tempered and crystallised when pumped through a tempering machine or device in the production system,
**characterised in,**
**that** during periods of non-production, the chocolate mass is heated to 40-50 °C, whereafter the chocolate mass is cooled (c-d) to a "rest" temperature (2-5, d-e), which is above the crystal-creation temperature for the particular chocolate mass,
and **that** the mass is kept at that temperature until next production start-up (e),
**that** the chocolate mass is cooled (c-d) to a "rest" temperature of 36 °C (2-5, d-e) or lower, and that the mass is kept at that temperature without being subjected to pumping, stirring or mixing.

2. Process according to claim 1,
**characterised in,**
**that** the chocolate mass is cooled (c-d) to a "rest" temperature that is 1 °C or higher above the crystal-creation temperature for the particular chocolate mass, (2-5, d-e).

3. Process according to claim 1,
**characterised in,**
**that** the chocolate mass is cooled to a "rest" temperature of 32-35 °C when the mass is dark chocolate mass (3, d-e).

4. Process according to claim 1,
**characterised in,**
**that** the chocolate mass is cooled to a "rest" temperature of 29-32 °C when the mass is milk chocolate mass (2, 4, d-e).

5. Process according to claim 1,
**characterised in,**
**that** the chocolate mass is cooled to a "rest" temperature of 26-29 °C when the mass is nougat or creme mass (5, d-e).

6. Process according to claim 1,
**characterised in,**
**that** any energy input to the production line is halted, so that the chocolate mass is allowed to cool under the influence of the temperatures of the surroundings of the production equipment only.

7. Process according to claim 1,
**characterised in,**
**that** the chocolate mass is cooled to a "rest" temperature, which is above the crystal-creation temperature for the particular chocolate mass, and that the mass is kept at that temperature until next production start-up without being heated to 40-50 °C in a premature step.

8. Process according to claim 1,
**characterised in,**
**that** the pumps of the production equipment is not being activated.

9. Process according to claim 1,
**characterised in,**
**that** the pressure build-up in the mass is measured during appliance of pump pressure, and
**that** the temperature of the mass is kept constant when the pressure build-up in the mass reaches a predefined maximum.

10. Process according to claim 9,
**characterised in,**
**that** the pressure build-up is measured periodically.

11. Process according to claim 9,
**characterised in,**
**that** the predefined maximum pressure build-up is 10 bar.

## Patentansprüche

1. Verfahren zur Steuerung einer Schokoladenmasse in Produktionsausrüstung während Zeiten, in denen nicht produziert wird,
wobei die Schokoladenmasse während Produktionszeiten in einem solchen Maße pumpbar ist, dass sie in der Ausrüstung eines Produktionssystems, wie z.B. einer Schokoladenformungslinie, einer Schokoladenüberziehlinie oder dergleichen fließen kann, und wobei die Schokoladenmasse temperiert und kristallisiert wird, wenn sie durch eine Temperiermaschine oder eine Vorrichtung im Produktionssystem gepumpt wird,
**dadurch gekennzeichnet, dass**
während Zeiten, in denen nicht produziert wird, die Schokoladenmasse auf 40-50°C erwärmt wird, wonach die Schokoladenmasse auf eine "Ruhe"-Temperatur (2-5, d-e), die über der Kristallbildungstemperatur für die jeweilige Schokoladenmasse liegt, abgekühlt (c-d) wird, und dass die Masse bis zum nächsten Produktionsbeginn (e) bei dieser Temperatur gehalten wird, dass die Schokoladenmasse auf eine "Ruhe"-Temperatur von 36°C (2-5, d-e) oder niedriger abgekühlt (c-d) wird, und dass die Masse bei dieser Temperatur gehalten wird, ohne Pumpen, Rühren oder Mischen unterworfen zu werden.

2. Verfahren nach Anspruch 1,
**dadurch gekennzeichnet, dass**
die Schokoladenmasse auf eine "Ruhe"-Temperatur abgekühlt (c-d) wird, die 1°C oder höher über der Kristallbildungstemperatur für die jeweilige Schokoladenmasse (2-5, d-e) liegt.

3. Verfahren nach Anspruch 1,
**dadurch gekennzeichnet, dass**
die Schokoladenmasse auf eine "Ruhe"-Temperatur von 32-35°C abgekühlt wird, wenn die Masse eine Zartbitterschokoladenmasse (3, d-e) ist.

4. Verfahren nach Anspruch 1,
**dadurch gekennzeichnet, dass**
die Schokoladenmasse auf eine "Ruhe"-Temperatur von 29-32°C abgekühlt wird, wenn die Masse eine Vollmilchschokoladenmasse (2, 4, d-e) ist.

5. Verfahren nach Anspruch 1,
**dadurch gekennzeichnet, dass**
die Schokoladenmasse auf eine "Ruhe"-Temperatur von 26-29°C abgekühlt wird, wenn die Masse eine Nougat- oder Crememasse (5, d-e) ist.

6. Verfahren nach Anspruch 1,
**dadurch gekennzeichnet, dass**
jede Energiezufuhr zur Produktionslinie angehalten wird, so dass die Schokoladenmasse nur unter dem Einfluss der Temperaturen der Umgebung der Produktionsausrüstung abkühlen kann.

7. Verfahren nach Anspruch 1,
**dadurch gekennzeichnet, dass**
die Schokoladenmasse auf eine "Ruhe"-Temperatur abgekühlt wird, die über der Kristallbildungstemperatur für die jeweilige Schokoladenmasse liegt, und dass die Masse bis zum nächsten Produktionsbeginn bei dieser Temperatur gehalten wird, ohne in einem vorzeitigen Schritt auf 40-50°C erwärmt zu werden.

8. Verfahren nach Anspruch 1,
**dadurch gekennzeichnet, dass**
die Pumpen der Produktionsausrüstung nicht aktiviert werden.

9. Verfahren nach Anspruch 1,
**dadurch gekennzeichnet, dass**
der Druckaufbau in der Masse während der Applikation von Pumpendruck gemessen wird, und dass die Temperatur der Masse konstant gehalten wird, wenn der Druckaufbau in der Masse ein vorab definiertes Maximum erreicht.

10. Verfahren nach Anspruch 9,
**dadurch gekennzeichnet, dass**
der Druckaufbau in regelmäßigen Abständen gemessen wird.

11. Verfahren nach Anspruch 9,
**dadurch gekennzeichnet, dass**
der vorab definierte maximale Druckaufbau 10 bar beträgt.

## Revendications

1. Procédé de contrôle d'une masse de chocolat dans un équipement de production lors de périodes de non-production,
ladite masse de chocolat étant, lors de périodes de production, apte à être pompée si bien qu'elle puisse s'écouler dans l'équipement d'un système de production tel qu'une chaîne de moulage de chocolat, une chaîne d'enrobage avec du chocolat ou similaire,
et ladite masse de chocolat subissant un tempérage
et une cristallisation lorsqu'elle est pompée à travers une machine ou un dispositif de tempérage dans le système de production,
**caractérisé**
**en ce que**, pendant des périodes de non-production, la masse de chocolat est chauffée à 40 à 50 °C, ce après quoi la masse de chocolat est refroidie (c-d) à une température de « repos » (2-5, d-e), qui est supérieure à la température de formation de cristaux pour la masse de chocolat en question,
et **en ce que** la masse est maintenue à cette température jusqu'à la prochaine reprise de la production (e),
**en ce que** la masse de chocolat est refroidie (c-d) à une température de « repos » de 36 °C (2-5, d-e) ou moins,
et **en ce que** la masse est maintenue à cette température sans être soumise à un pompage, une agitation ou un brassage.

2. Procédé selon la revendication 1,
**caractérisé**
**en ce que** la masse de chocolat est refroidie (c-d) à une température de « repos » qui est supérieure d'au moins 1 °C à la température de formation de cristaux pour la masse de chocolat en question (2-5, d-e).

3. Procédé selon la revendication 1,
**caractérisé**
**en ce que** la masse de chocolat est refroidie à une température de « repos » de 32 à 35 °C lorsque la masse est une masse de chocolat noir (3, d-e).

4. Procédé selon la revendication 1,
**caractérisé**
**en ce que** la masse de chocolat est refroidie à une température de « repos » de 29 à 32 °C lorsque la masse est une masse de chocolat au lait (2, 4, de).

5. Procédé selon la revendication 1,
**caractérisé**
**en ce que** la masse de chocolat est refroidie (c-d) à une température de « repos » de 26 à 29 °C lorsque la masse est une masse de praline ou de crème (5, d-e).

6. Procédé selon la revendication 1,
**caractérisé**
**en ce que** tout apport d'énergie à la chaîne de production est interrompu, de telle sorte que la masse de chocolat puisse refroidir uniquement sous l'effet des températures du milieu dans lequel se trouve l'équipement de production.

7. Procédé selon la revendication 1,
**caractérisé**
**en ce que** la masse de chocolat est refroidie à une température de « repos », qui est supérieure à la température de formation de cristaux pour la masse de chocolat en question,
et **en ce que** la masse est maintenue à cette température jusqu'à la prochaine reprise de la production sans être chauffée à 40 à 50 °C dans une étape préalable.

8. Procédé selon la revendication 1,
**caractérisé**
**en ce que** les pompes de l'équipement de production ne sont pas activées.

9. Procédé selon la revendication 1,
**caractérisé**
**en ce que** l'augmentation de pression dans la masse est mesurée lors de l'application d'une pression par la pompe,
et **en ce que** la température de la masse est maintenue constante lorsque l'augmentation de pression dans la masse atteint un maximum prédéfini.

10. Procédé selon la revendication 9,
**caractérisé**
**en ce que** l'augmentation de pression est mesurée de manière périodique.

11. Procédé selon la revendication 9,
**caractérisé**
**en ce que** l'augmentation de pression maximale prédéfinie correspond à 10 bars.
